# EUROPEAN PATENT SPECIFICATION

(11) **EP 2 877 541 B1**
(45) Date of publication and mention of the grant of the patent: **25.05.2016**
(21) Application number: 13745319.7
(22) Date of filing: 26.07.2013
(51) Int. Cl.: C09D 5/00

(54) **WATERBORNE COATINGS**
WÄSSRIGE BESCHICHTUNGEN
REVÊTEMENTS À BASE D'EAU

(30) Priority: 26.07.2012 US 201261676127 P
(43) Date of publication of application: 03.06.2015
(73) Proprietor: The Sherwin-Williams Company, Cleveland, OH 44115 (US)
(72) Inventor: DICOLA, Louisa, D., Strongsville, OH 44149 (US); SHAH, Shailesh, S., Westlake, OH 44145 (US)
(74) Representative: Dannenberger, Oliver Andre
(86) International application number: PCT/US2013/052229
(87) International publication number: WO 2014/018843

(56) References cited:
- EP-A1- 0 558 907
- WO-A1-01/60887
- G. GÜCLÜ: "Alkyd resins based on waste PET for water-reducible coating applications", POLY. BULL., vol. 64, 2010, pages 739-748, XP002715865,
- D. E. NIKLES ET AL: "New Motivation for the Depolymerization Products Derived from Poly(Ethylene Terephthalate) (PET) Waste: a Review", MACROMOL. MATER. ENG., vol. 290, 2005, pages 13-30, XP002715866,

## Description

This invention relates to waterborne coatings having improved performance properties. Conventional latex paints are widely used because they provide reduced volatile organic compound emission and because they allow easier clean up than solvent borne coatings. They can provide coatings with low tendency to yellow on exposure, excellent exterior durability, flexibility, and gloss retention. However, many typical latex coatings may lack certain performance properties, such as flow and leveling open time, adhesion and other properties. Additionally, it can be difficult to provide water borne coatings having excellent physical properties while also possessing the optimum high shear and mid and low shear rate viscosities for package stability and desirable application properties. The mid and low shear rate viscosities (typically measured at shear rates from around 50 sec.⁻¹ to around 0.1 sec.⁻¹) are generally related to a coatings flow and leveling. The low shear rate viscosity must be high enough to prevent pigment settling and to minimize sagging when the coating is applied to a vertical surface.

The high shear rate viscosity (typically measured at a shear rate of around 10,000 sec.⁻¹) provides brush drag when the coating is applied and aids in providing proper film thickness. In some embodiments, the coatings of this invention will have a high shear viscosity (measured at 10,000 sec.⁻¹) between about 1.0 and 3.0 poise, and a mid shear rate viscosity (measured at 50 sec.⁻¹) of between about 7.0 to 20.0 poise when measured at 46%NVM.

It has now been found that waterborne coating compositions having improved properties, such as improved physical properties and excellent viscosity performance across a range of shear rates, can be produced by formulating a coating comprising (i) a crosslinkable binder resin having latent crosslinking groups; (ii) a suitable crosslinker for the crosslinkable binder resin; and (iii) a waterborne air-curing, monomer modified alkyd emulsion obtained by the acidolysis of a polyalkylene terephthalate or polyalkylene naphthanate and subsequent monomer modification. For certain applications, the alkyd polymer will be based on polyethylene terephthalate (PET) and the acidolysis will involve fatty acids or oils to provide the air-drying capabilities. This invention relates to coating compositions having a balance of properties making them suitable for a variety of architectural and industrial paint applications.

In one embodiment, this invention relates to an aqueous coating composition comprising a crosslinkable binder resin having latent crosslinking functionality, an effective crosslinking amount of a crosslinker for the binder resin, and an air-curing, monomer modified alkyd emulsion obtained by the acidolysis of a polyalkylene terephthalate or polyalkylene naphthanate and subsequent monomer modification.

### 1. The Crosslinkable Binder Resin

The present invention is directed to an aqueous coating composition in which the crosslinkable binder resin has functional groups that further react with one or more co-dispersed crosslinkers some time after initial formation of the binder resin. In certain applications the substantive crosslinking will be delayed until application of the coating to a substrate and evaporation of at least some of the aqueous carrier.

As reactive elements, the crosslinkable binder resin will comprise the polymerization reaction product of at least one or more copolymerizable monoethylenically unsaturated monomers, wherein at least one of the monoethylenically unsaturated monomers contains latent crosslinking functionality. This crosslinkable binder resin is used in combination with a crosslinking amount of at least one crosslinker reactive with the crosslinking functionality.

The latent crosslinking functionality can be imparted to the binder resin by incorporating monomers having reactive functional groups known in the art. For example (i) the pendent functional group could be a carbonyl group, such as ketone, or aldehyde, or acetoacetoxy and the crosslinker could representatively have amino or hydrazide groups; (ii) the pendent functional group could be epoxy and the crosslinker could representatively have carboxylic acid, thiol or amino groups; (iii) the pendent functional group could be silane and the crosslinker could representatively have hydroxyl groups; and (iv) the pendent functional groups could be hydroxyl groups and the crosslinker could representatively have isocyanate groups or methylol groups or etherified methylol groups.

Alternatively, the functional groups identified as useful in the crosslinkers could be incorporated into the binder resin and the corresponding identified reactive group could be present in the crosslinker. The exact nature of the coreactive groups is not critical. Any coreactive groups are possible as pendent functional groups and crosslinking groups, provided the coating composition remains fluid until application to a substrate. If desired, the crosslinker can be withheld from the coating composition until immediately prior to application to ensure that the coating composition remains fluid. In some embodiments, such as the use of pendent carbonyl groups on the binder resin, and the use of a water-soluble polyhydrazide, it is convenient to incorporate the hydrazide into the aqueous coating to provide a single package which will cure upon application.

The latex polymers used as crosslinkable binder resins in accordance with the present invention include those polymers polymerized from one or more suitable monomers. Typically, the binders are polymerized from one or more copolymerizable monoethylenically unsaturated monomers such as, for example, vinyl monomers and/or acrylic monomers.

The vinyl monomers suitable for use in accordance with the present invention include any compounds having vinyl functionality, i.e., ethylenic unsaturation, exclusive of compounds having acrylic functionality, e.g., acrylic acid, methacrylic acid, esters of such acids, acrylonitrile and acrylamides. Preferably, the vinyl monomers are selected from the group consisting of vinyl esters, vinyl aromatic hydrocarbons, vinyl aliphatic hydrocarbons, vinyl alkyl ethers and mixtures thereof.

Suitable vinyl monomers include vinyl esters, such as, for example, vinyl propionate, vinyl laurate, vinyl pivalate, vinyl nonanoate, vinyl decanoate, vinyl neodecanoate, vinyl butyrates, vinyl benzoates, vinyl isopropyl acetates and similar vinyl esters; vinyl aromatic hydrocarbons, such as, for example, styrene, methyl styrenes and similar lower alkyl styrenes, chlorostyrene, vinyl toluene, vinyl naphthalene and divinyl benzene; vinyl aliphatic hydrocarbon monomers, such as, for example, vinyl chloride and vinylidene chloride as well as alpha olefins such as, for example, ethylene, propylene, isobutylene, as well as conjugated dienes such as 1,3 butadiene, methyl-2-butadiene, 1,3-piperylene, 2,3-dimethyl butadiene, isoprene, cyclohexene, cyclopentadiene, and dicyclopentadiene; and vinyl alkyl ethers, such as, for example, methyl vinyl ether, isopropyl vinyl ether, n-butyl vinyl ether, and isobutyl vinyl ether.

The acrylic monomers suitable for use in accordance with the present invention comprise any compounds having acrylic functionality. Preferred acrylic monomers are selected from the group consisting of alkyl acrylates, alkyl methacrylates, acrylate acids and methacrylate acids as well as aromatic derivatives of acrylic and methacrylic acid, acrylamides and acrylonitrile. Typically, the alkyl acrylate and methacrylic monomers (also referred to herein as "alkyl esters of acrylic or methacrylic acid") will have an alkyl ester portion containing from 1 to about 18, preferably about 1 to 8, carbon atoms per molecule.

Suitable acrylic monomers include, for example, methyl acrylate and methacrylate, ethyl acrylate and methacrylate, butyl acrylate and methacrylate, propyl acrylate and methacrylate, 2-ethyl hexyl acrylate and methacrylate, cyclohexyl acrylate and methacrylate, decyl acrylate and methacrylate, isodecyl acrylate and methacrylate, benzyl acrylate and methacrylate, isobornyl acrylate and methacrylate, neopentyl acrylate and methacrylate, and 1-adamantyl methacrylate.

In addition to the specific monomers described above, those skilled in the art will recognize that other monomers such as, for example, allylic monomers, or monomers which impart wet adhesion, such as monomers having tertiary amine, ethylene ureido, or N-heterocyclic groups, can be used in place of, or in addition to, the specifically described monomers in the preparation of the binders. Representative wet adhesion promoting monomers include methacrylamidoethyl ethylene urea, dimethylaminoethyl methacrylate, vinyl imidizole and 2-ethyleneuriedo-ethyl methacrylate. The amount of such other monomers is dependent on the particular monomers and their intended function, which amount can be determined by those skilled in the art. In one embodiment of this invention, a wet adhesion promoting monomer, if desired, could be present at levels ranging up to about 5% of the total monomer mix by weight.

In one embodiment of the present invention the binder resin may comprise a "single stage" polymer which is typically obtained by admixing selected polymerizable monomers in a single reaction mixture. In another useful embodiment, the binder resin may be obtained by admixing the monomers in multiple stages having different monomer compositions or concentrations at various stages of the addition. For example, the monomer mixture could be varied as the reaction progresses to provide a sequentially formed composition, whereby essentially one polymer is prepared in the presence of another, preformed polymer. Without being limited to any particular theory, this polymerization process possibly, but not necessarily, results in a core/shell particle arrangement. For some applications, the monomer mix will be varied to provide one sequence of the reaction with a higher concentration of "softer" monomers (those whose homopolymers have relatively lower glass transition temperatures (Tg) and another sequence might involve a greater concentration of "harder" monomers. In embodiments where the binder resin comprises a sequentially formed polymer composition, the lower Tg polymer (the "softer" polymer) may be the core in a core/shell particle arrangement while the higher Tg material (the "harder" polymer) comprises the shell. An opposite arrangement may also be used in connection with the present invention. As used herein "two-stage" polymer refers to an overall polymer where one polymer is essentially formed in the presence of another, preformed polymer.

The monomer mix polymerized to create the crosslinkable binder resin of the present invention will comprise at least one ethylenically unsaturated monomer containing "latent crosslinking" capabilities, which as used herein means a monomer which possesses the ability to further react with a crosslinker some time after initial formation of the polymer. The crosslinking reaction can occur through the application of energy, e.g., through heat or radiation. Also, drying can activate the crosslinking polymer through changes in pH, oxygen content, evaporation of solvent or carrier, or other changes that causes a reaction to occur. The particular method of achieving crosslinking in the binder polymer is not critical to the present invention. A variety of chemistries are known in the art to produce crosslinking in latexes.

Representative examples of latent crosslinking carbonyl-containing monomers include acrolein, methacrolein, diacetone acrylamide, diacetone methacrylamide, 2 butanone methacrylate, formyl styrol, diacetone acrylate, diacetone methacrylate, acetonitrile acrylate, acetoacetoxyethyl methacrylate, acetoacetoxyethyl acrylate and vinylaceto acetate. These monomers normally do not affect crosslinking until during final film formation, for example, when the aqueous polymer emulsion simultaneously contains an appropriate added amount of a reactive material such as a polyamine compound as crosslinker. Particularly suitable compounds of this type are the dihydrazides and trihydrazides of aliphatic and aromatic dicarboxylic acids of 2 to 20 carbon atoms. Polyamine compounds useful as crosslinkers for the carboxyl functional groups include those having an average of at least two carbonyl-reactive groups of the formula - NH, and carbonyl reactive groups derived from such groups. Examples of useful amine functional groups include R-NH2, R-O-NH₂. R-O-N=C<, R-NH-C(=O)-O-NH₂, wherein R is alkylene, alicyclic or aryl and may be substituted. Representative useful polyamine include ethylene diamine, isophorone diamine, diethylenetriamine and dibutylenetriamine. In one embodiment of this invention it is useful to utilize polyhydrazides as the polyamine compounds. Representative useful polyhydrazides include oxalic dihydrazide, adipic dihydrazide, succinic dihydrazide, malonic dihydrazide, glutaric dihydrazide, phthalic or terephthalic dihydrazide and itaconic dihydrazide. Additionally, water-soluble hydrazines such as ethylene-1,2-dihydrazine, propylene-1,3-dihydrazine and butylene-1,4-dihydrazine can also be used as one of the crosslinking agents.

Additional building blocks which are suitable for posterosslinking are those which contain hydrolyzable organosilicon bonds. Examples are the copolymerizable monomers methacryloyloxypropyltrimethoxysilane and vinyltrimethoxysilane.

Epoxy-, hydroxy- and/or N-alkylol-containing monomers, for example, glycidyl acrylate, N-methylolacrylamide and -methacrylamide and monoesters of dihydric alcohols with α,β-monoethylenically unsaturated carboxylic acids of 3 to 6 carbon atoms, such as hydroxyethyl, hydroxy-n-propyl or hydroxy-n-butyl acrylate and methacrylate are also suitable for posterosslinking. Primary or secondary amino containing acrylates or methacrylates such as t-butyl amino ethyl methacrylate are also suitable.

In one embodiment the binder resin can be obtained by the polymerization of a mixture of monomers, which mixture contains about 0.5 to about 25% by weight, based on the total weight of the polymer, of at least one monomer having latent crosslinking functionality.

In one embodiment of the present invention, the binder resin is an acid functional latex. Specific acid functional monomers suitable for use in accordance with the present invention include, for example, acrylic acid, methacrylic acid, ethacrylic acid, itaconic acid, maleic acid, dimeric acrylic acid or the anhydrides thereof. Besides carboxylic acids and anhydrides, monomers possessing other acid groups such as sulfonic or phosphoric acid groups are also useful. Representative monomers include ethylmethacrylate-2-sulfonic acid, 2-acrylamido-2-methylpropane sulfonic acid, 2-methyl-2-propenoic acid ethyl-2-phosphate ester (HEMA-phosphate), (1-phenylvinyl)-phosphonic acid, or (2-phenylvinyl)-phosphonic acid. Mixtures of acids are also practical.

For many applications, typically, the particle size of the binder resins would range from about 0.1 to 1.0 microns. The Tg of some useful representative binder resins, of the present invention would typically be from about -60 to 100°C. Binder resins having a Tg less than about 20°C typically require less volatile organic compounds (solvents and coalescents) to form a smooth film compared to higher Tg polymers. In one useful embodiment the Tg would be less than about 10°C. In another useful embodiment the Tg is less than about 1°C. As used herein, the term "Tg" means polymer glass transition temperature.

Preparation of latex compositions is well known in the paint and coatings art. Any of the well-known free-radical emulsion polymerization techniques used to formulate latex polymers can be used in the present invention. Such procedures include, for example, single feed, core-shell, and inverted core-shell procedures which produce homogeneous or structured particles.

In one useful embodiment the crosslinkable binder resin would be obtained by polymerizing a monomer mixture of about 1-25% by weight of a monomer having latent crosslinking functionality, 0.5 to about 15% of an acid functional monomer and about 60 to 98.5% other monomers. In another useful embodiment the monomer mixture would also comprise about 0.1 to about 10% of a wet adhesion promoting monomer. In another embodiment, the monomer mixture would comprise about 1-25% by weight of a monomer having latent crosslinking functionality, 0.5 to about 15% of an acid functional monomer, 0.1 to about 10% of a wet adhesion monomer, I to about 55 parts styrene, and the remainder selected from other copolymerizable monomers.

### 2. Crosslinkers

The crosslinker for reaction with the latent crosslinking functionality need only be present in an amount necessary to achieve the desired degree of cure. For many applications, the crosslinker will typically be present at a level to provide at least 0.1 equivalent for each equivalent of latent crosslinking functionality.

In one of the embodiments of this invention, the crosslinker would be present at a level to provide between about 0.2 to about 2.0 equivalents for each equivalent of latent crosslinking functionality. In some useful embodiments the crosslinker will be present at a level to provide 0.4 to about 1.2 equivalents for each equivalent of latent crosslinking functionality.

In another useful embodiment the crosslinker would be present at a level to provide about 0.4 to about 1.0 equivalent for each equivalent of latent crosslinking functionality.

### 3. Monomer Modified Polyalkylene Terephthalate or Naphthalate Alkyds

The coatings of this invention also require the incorporation of an air-drying monomer modified alkyd emulsion resin. For many embodiments, levels of the additional resin between about 5% and about 60% by weight solids of the combined weight solids of the crosslinkable resin and the crosslinker and the alkyd resin are typical. For some embodiments the alkyd resin will be present at a level between about 15% and about 35% by weight solids of the total combined weight solids of the crosslinkable resin, crosslinker and alkyd resin.

One element of this invention relates to an aqueous alkyd dispersion derived from a polyalkylene terephthalate, or polyalkylene naphthalate, as a raw material for producing the resin. The process for making the dispersion includes an acidolysis reaction of a polyalkylene terephthalate or polyalkylene naphthalate and the subsequent monomer modification of the resin followed by combining the modified resin with water in the presence of a base to provide water dispersibility. The production of such alkyds is taught, representatively in US patents 5,371,112 and 7,129,278 the teachings of which are hereby incorporated by reference.

One useful method to produce the polyalkylene terephthalate based alkyd is that taught in 7,129,278 and involves generally a process for forming a polymer which comprises reacting:
a. a polymer formed as the reaction product of
   (1) a mixture of compounds resulting from an acidolysis reaction of a polyalkylene terephthalate (or naphthalate) with a member of the group consisting of acid- and anhydride-functional materials; and
   (2) an alcohol,
      wherein the resulting reaction product has an acid value of less than 20; and
b. an ethylenically-unsaturated monomer suitable for modifying the polymer to form a modified polymer resin; wherein the modified polymer resin has an acid value of less than 30, and wherein said modified polymer resin is then combined with water in the presence of a base to form the aqueous polymer composition.

The monomer modified alkyd dispersion of this invention utilizes polyalkylene terephthalate, or polyalkylene naphthalate, as the starting material for the production of the polymer. One useful polyalkylene terephthalate is polyethylene terephthalate (PET). Polyethylene naphthalate (PEN) can also be used. Other polyalkylene terephthalates are polypropylene terephthalate, polybutylene terephthalate, etc.

In the production of the alkyd, a polyalkylene terephthalate resin is first digested into lower molecular weight oligomeric units through an acidolysis reaction. The digestion product of the acidolysis reaction is then further reacted with a hydroxy-functional reactant to produce a resin which is further monomer-modified and dispersed into water. For purposes of this invention, the use of polyethylene terephthalate is described; however, it should be recognized by those skilled in the art that other polyalkylene terephthalates, or polyalkylene naphthalates, can be used similarly.

The actual source of PET usable herein is not of critical importance to this invention. "Virgin" PET, that is PET which is commercially produced specifically as a raw material, is acceptable from a chemical standpoint for use herein. Likewise, recycled or reclaimed PET is acceptable from a chemical standpoint. At the time of this application, there are advantages to the environment (reduction of solid waste) and to the economics of this process (recycled PET is much less expensive than virgin PET) by using recycled or reclaimed PET; and, there are no performance disadvantages to using recycled PET versus virgin PET. Typically, the sources for PET are many and varied. One source of either virgin or recycled PET is material from PET polymer manufacturers. Another source for PET can be post-industrial outlets. A further source is reclaimed PET, such as recycled PET beverage bottles. It should be appreciated that any source of PET is acceptable. Polyethylene naphthalate and polybutylene terephthalate are available similarly.

The PET should generally be provided in a comminuted form. It can be flaked, granulated, ground to a powder or pelletized. The only constraint placed on the PET at this point is that it is relatively pure; that is, there should not be a level of impurities above about one weight percent (1 wt %) nor should there be any appreciable level of impurities which are chemically reactive within this process. Polyols also used in the manufacture of PET include diethylene glycols, triethylene glycols, neopentyl glycol, cyclohexane dimethanol, butanediols, and propanediols are used as polymer modifiers, and are acceptable as used in this invention.

PET is comprised of repeating units of ethylene glycol and terephthalic acid connected by ester linkages. Each repeating unit of PET has a weight average molecular weight of 192 with one equivalent of ethylene glycol and one equivalent of terephthalic acid. By reacting PET with an acid or anhydride functional material in an acidolysis reaction, it is possible to reduce the average chain length of the PET molecules. The chemistry of PET is such that an equilibrium exists between PET, water, ethylene glycol (EG), terephthalic acid (TPA), and the acid used to reduce the chain length. This equilibrium makes it possible to substantially reverse the polymerization process and depolymerize PET into its starting materials.

Suitable acid-functional materials for the acidolysis reaction include mono-functional acids such as benzoic, crotonic and sorbic acids; and acids having an acid functionality on average of at least two carboxylic acid groups, such as phthalic acid, isophthalic acid, 1,4-cyclohexane dicarboxylic acid, 1,3-cyclohexane dicarboxylic acid, succinic acid, adipic acid, azelaic acid, maleic acid, fumaric acid; trimellitic acid, trimesic acid, naphthalene dicarboxylic acids, carboxy-terminated polybutadiene, 4,4-dicarboxy diphenoxy ethane, and the hydroxy carboxylic acids of piralactone. Other suitable acids include the saturated acids such as butyric, caproic, caprylic, capric, lauric, myristic, palmitic, stearic, 12-hydroxystearic, arachidic, behenic and lignoceric acids; the unsaturated acids such as palmitoleic, oleic, ricinoleic, linoleic, linolenic, eleostearic, licaric, gadoleic and eracic acids; and the oils (and their fatty acids) such as canola, rapeseed, castor, dehydrated castor, coconut, coffee, corn, cottonseed, fish, lard, linseed, oticica, palm kernel, peanut, perilla, safflower, soya, sunflower, tallow, tung, walnut, vernonia, tall and menhaden oils; and blends and mixtures of natural and synthetic oils and fatty acids, particularly those oils and fatty acids with high iodine numbers. In order to provide the alkyd with air drying capability it is convenient to utilize the drying oil and semi-drying oil fatty acids as at least some of the acid in the acidolysis reaction.

Representative anhydrides useful in the acidolysis include, acrylic anhydride, methacrylic anhydride, phthalic anhydride, 3-nitrophthalic anhydride, 4-nitrophthalic anhydride, 3-flourophthalic anhydride, 4-chlorophthalic anhydride, tetrachlorophthalic anhydride, tetrabromophthalic anhydride, tetrahydrophthalic anhydride, hexahydrophthalic anhydride, methylhexahydrophthalic anhydride, succinic anhydride, dodecenylsuccinic anhydride, octylsuccinic anhydride, maleic anhydride, dichloromaleic anhydride, glutaric anhydride, adipic anhydride, chlorendic anhydride, itaconic anhydride, citraconic anhydride, endo-methylenetetrahydrophthalic anhydride, cyclohexane-1,2-dicarboxylic anhydride, 4-cyclohexene-1,2-dicarboxylic anhydride, 4-methy 1-4-cyclohexene-1,2-dicarboxylic anhydride, 5-norbornene-2,3-dicarboxylic anhydride, 1,4-cyclohexadiene-1,2-dicarboxylic anhydride, 1,3-cyclopentanedicarboxylic anhydride, diglycolic acid anhydride, benzophenone tetracarboxylic dianhydride and the like.

Other useful anhydrides include those anhydrides having a free carboxyl group in addition to the anhydride group such as trimellitic anhydride, aconitic anhydride, 2,6,7-naphthalene tricarboxylic anhydride, 1,2,4-butane tricarboxylic anhydride, 1,3,4- cyclopentane tricarboxylic anhydride, and the like. It should be appreciated that other acids and anhydrides should be considered equivalents of those named herein.

The acid- or anhydride functional material will generally have a number average molecular weight below about 2000. Preferably the acid- or anhydride-functional material will have a number average molecular weight of below about 600. Typical number average molecular weights of these materials will range from about 96 to about 600.

Optionally, a catalyst can be used for the acidolysis reaction. If used, suitable catalysts for acidolysis of PET include the traditional transesterification catalysts including stannous octoate, calcium hydroxide, lithium hydroxide, barium hydroxide, sodium hydroxide, lithium methoxide, manganese acetate tetrahydrate, dibutyl tin oxide, butyl stannoic acid, and hydrated monobutyl tin oxide. If used, the catalyst should be present in an amount of from about 0.1 weight % to about 1.5 weight % based upon the total weight of the PET and acid-functional material.

When PET and an acid- or anhydride-functional material are reacted together in the presence of the catalyst (optional) and heat, the high molecular weight PET molecule is broken down into shorter chain fragments. This is accomplished through acidolysis of the ester linkages and exchange by the acid with the terephthalic acid units of the PET molecule. This exchange continues to occur until a new equilibrium is established between the PET, the shorter chain length PET, the shorter chain length PET substituted with the acid, the acid-functional material and terephthalic acid.

Subsequent to acidolysis, the remaining PET fragments and products in equilibrium therewith are predominantly acid-functional. As described further below, the acidolysis reaction products can be further reacted with hydroxy-functional materials and the like. The reaction can be carried out in the presence of a solvent for azeotroping of water or fusion in solventless systems.

The products of the acidolysis reaction are further reacted with hydroxyfunctional materials to produce a polyester product useful in coating compositions. Since the acidolysis reaction products are predominantly acid-functional, they can be further reacted with alcohols including those taught below to obtain polymer compositions useful in coatings. By controlling the amounts and types of reactants, as well as the length and temperature of the reaction, one can formulate low acid value systems from the acidolysis reaction products. The products of such reactions include alkyds and polyesters which can be further modified and dispersed in water.

Generally, the alcohols used for reaction with the acidolysis reaction product will have number average molecular weights of below about 4000, and typically, number average molecular weights will range from about 30 to about 4000, and especially 100 to about 600. Methods of preparing alcohols are well known in the art and the method of preparation of the alcohols is not critical to the practice of this invention.

Suitable alcohols include the CI-C22 linear and branched saturated and unsaturated alcohols including, for example, methanol, ethanol, propanol, butanol, hexanol, linoleyl alcohol, trimethylolpropane diallyl ether, allyl alcohol, 2- mercaptoethanol and the like. Additionally, useful alcohols include the hydroxyfunctional polyethers, polyesters, polyurethanes, polycaprolactones, etc.

Saturated and unsaturated polyols include glycerol, castor oil, ethylene glycol, dipropylene glycol, 2,2,4-trimethyl 1,3-pentanediol, neopentyl glycol, 1,2-propanediol, 1,3-propanediol, 1,4-butanediol, 1,3-butanediol, 2,3-butanediol, 1,5-pentanediol, 1,6- hexanediol, 2,2-dimethyl-1,3-propanediol, dimethylol propionic acid, acetylenic diols, hydroxy-terminated polybutadiene, 1,4-cyclohexanedimethanol, 1,2-cyclohexanedi methanol, 1,3- cyclohexanedimethanol, 1,4-bis(2-hydroxyethoxy)cyclohexane, trimethylene glycol, tetra methylene glycol, pentamethylene glycol, hexamethylene glycol, decamethylene glycol, diethylene glycol, triethylene glycol, tetraethylene glycol, 1,4-benzenedimethanol, 1,4-benzenediethanol, 2,4-dimethyl- 2-ethylenehexane-1,3-diol, 2-butene-1,4-diol, trimethylolethane, trimethylolpropane, di-trimethylolpropane, trimethylolpropane monoallyl ether, trimethylolhexane, triethylolpropane, 1,2,4-butanetriol, glycerol, pentaerythritol, dimethylolpropane, dipentaerythritol, methyl propanediol, phenolic polyols, polypropylene ether glycols, polyethylene ether glycols etc.

Another useful class of hydroxy-functional materials are polymers such as those prepared by condensation polymerization reaction techniques or ring opening reactions of epoxies as are well known in the art.

As stated above, the acidolysis reaction products can be further reacted with alcohol to produce low acid value products. The term "low acid value products" is meant to be those compositions having acid values lower than about 20. in order to formulate an acidolysis reaction product to a low acid value of less than about 20, the following stoichiometric proportions of materials should be used. For each mole of repeating unit PET used, from about 1.5 to about 4.0 equivalents of acid/anhydride should be used in the acidolysis reaction, followed by further reaction with about 2.0 to about 4.0 equivalents of hydroxy-functionality. Preferably, the equivalents of acid/anhydride to repeating unit of PET should be about 2.0:1 to about 3.1:1 and the equivalents of OH to PET should be about 2.3:1 to about 3.7:1. Optionally, small amounts of amine or diamine can be substituted for some of the alcohols.

The initial acidolysis produced resin is then directly modified with unsaturated monomers, to produce the monomer modified water-reducible polymers utilized in this invention.

Direct monomer modification is typically conducted under conditions also well known in the art, including the procedures taught in U.S. Pat. Nos. 4,735,995 and 4,873,281, as well as by the procedures taught in the Examples below.

When monomerically modifying the base polymers, the incorporation of a sufficient amount of acid-functional monomer material, with or without surfactants, will enable the final polymer products to be reducible in water or other aqueous systems when sufficiently neutralized as discussed below.

Surfactants that can optionally be used for this invention include nonionic surfactants such as, but not limited to, nonylphenol ethoxylates (such as IGEPAL® CO-Series available from Rhodia, Cranberry, N.J.), octylphenol ethoxylates (such as IGEPAL® CA-Series available from Rhodia, Cranberry, N.J.), polyether polyols (such as PLURONIC® or TETRONIC® available from BASF Corporation, Mt. Olive, N.J.), and acetylenic alcohols (such as SURFYNOUD available from Air Products, Allentown, Pa.). The surfactant, if present, is preferably about 1% to about 5% of the total weight of the polymer.

Generally, amounts of acid-functional monomer materials greater than about 5.0% by weight of the total amount of monomer and other ethylenically unsaturated materials will result in a coating composition which is water reducible. Amounts less than the above will generally result in coatings which are not water reducible. Preferably, the monomer-modified base polymer of this invention has low volatile organic levels. More preferably, the volatile organic level of the monomer-modified base polymer is less than 10%.

Suitable monomers for modifying the base polymer include the unsaturated acids, such as acrylic acid, methacrylic acid, itaconic acid, crotonic acid, maleic acid, and half esters of maleic and fumaric acids, such as butyl hydrogen maleate and ethyl hydrogen fumarate, in which one carboxyl group is esterified with an alcohol. Examples of other ethylenically unsaturated monomers which can be used for the monomer modification of the acidolysis reaction product include the alkyl acrylates, such as methyl acrylate, ethyl acrylate, butyl acrylate, propyl acrylate, 2-ethylhexyl acrylate and isobornyl acrylate; the alkyl methacrylates, such as methyl methacrylates, butyl methacrylate, 2-ethylhexyl methacrylate, decyl methacrylate, lauryl methacrylate, acetoacetoxyethyl methacrylate, dimethylaminoethyl methacrylate, and allyl methacrylates and isobornyl methacrylate; hydroxyalkyl acrylates and methacrylates such as hydroxyethyl acrylate, hydroxypropyl acrylate, hydroxyethyl methacrylate, hydroxypropyl methacrylate; acrylarnides and methacrylamides, diacetone acrylamide, and unsaturated nitriles such as acrylonitrile, methacrylonitrile, and ethacrylonitrile. Other ethylenically unsaturated monomers (vinyl monomers) which can be used in addition to the acrylic monomers include: vinyl aromatic hydrocarbons (such as styrene, alpha-methyl styrene, and vinyl toluene); and vinyl aliphatic hydrocarbons (optionally substituted, for example, by halogen atoms) such as vinyl acetate, vinyl versatates, and vinyl chloride.

The monomer modification of the acidolysis reaction product generally can be conducted at from 80° C. to 160° C., and typically are conducted at from 100° C. to 150° C.

A polymerization initiator can be employed in the monomer modification stage. Examples of initiators include, but are not limited to: peroxyesters such as tertiary-butyl perbenzoate; azo compounds such as azobis(isobutyronitrile); peroxides such as benzoyl peroxide and cumene hydroperoxide; peracetates such as tertiary butyl peracetate; percarbonates such as isopropyl percarbonate, peroxycarbonates such as butyl isopropyl peroxycarbonate, and similar compounds. The quantity of initiator employed can be varied considerably; however, in most instances, it is desirable to utilize from about 0.1 to about 10 percent by weight based on the weight of ethylenically unsaturated monomers used. Where desired, a chain modifying agent or chain transfer agent can be added to the polymerization mixture for control of the molecular weight of the resulting resin. Examples of such agents include the mercaptans, such as tertiary dodecyl mercaptan, dodecyl mercaptan, octyl mercaptan, and hexyl mercaptan, etc.

The monomer modification reactions for preparing a resin composition of the invention can be carried out in the presence of an organic solvent, preferably only a limited amount of organic solvent being used so as to minimize the organic solvent content of the resulting product. In the preferred method of preparing the monomer modified resin of this invention, the base polymer serves as a polymerization medium for preparation of the modified polymer thereby significantly reducing the amount of organic solvent needed. The amount of monomeric materials used for modification is in the range of about 10% to about 80%, and more preferably, about 20% to about 60% based on total modified resin solids. For many applications, the modified polymer will have an acid value of less than 30.

The monomer modified acid functional alkyd call be dispersed in water by admixing it with water in the presence of a suitable base. In one process, the monomer modified alkyd resin is initially liquefied by heating the resin to at least its melting point, and more preferably, to a temperature of at least 5° above its melting point so the polymer maintains a molten and flowable state, but below the decomposition temperature of the polymer. Typically, the modified polymer resin will melt in the temperature range from about 120° C. to about 140° C. A separate vessel of water, containing a base for neutralization of the carboxylic acids on the polymer, is heated to between 20° C. and 70° C. The base can be an amine compound or an alkali hydroxide. Water solubility or water dilutability may be given to the resin by effecting neutralization of acidic groups, such as carboxyl, with a basic material, such as monomethylamine, dimethyl amine, trimethylamine, monoethylamine, triethylamine, monoisopropylamine, diisopropylamine, diethylene triamine, triethylenetetramine, monoethanolamine, diethanolamine, triethanolamine, monoisopropanolamine, diisopropanolamine, di methylethanolamine, morpholine, methyl morpholine, piperazine, ammonia, sodium hydroxide, potassium hydroxide and the like, with or without surfactants. Typically enough base is added to neutralize some of the acid on the polymer. The water phase and the polymer phase are brought into contact with one another and, if desired, can be dispersed in a high shear mill or a homogenizer. The process can be continuous or in batch mode where the tank or mixing vessel contains the water phase. Once the polymer is dispersed in water, the pH is typically adjusted to 7.6-8.2 and the percent solids are adjusted to 35-55% by weight. Preferably, the resulting polymer dispersion has a volatile organic level of less than 10% and an acid number of less than 30.

The coating composition of the present invention is manufactured using techniques known to those skilled in the art of manufacturing paint. The coatings of this invention may also include conventional pigments and flattening agents as well as various additives. Examples of suitable inorganic flattening agents include silicates, such as talc and various forms of silica, such as amorphous, aerogel, diatomaceous, hydrogel and fumed silicas. Conventional pigments include titanium dioxide and other inorganic or organic pigments. The coatings of this invention also may incorporate one or more polymeric opacifying agents. The polymeric opacifiers are generally small particle size non-film forming polymerized beads which are insoluble in the coating in which they are dispersed. Typically the polymeric opacifying agents will replace some of the hiding pigments which would otherwise be incorporated into the coating. The beads may be solid or they may contain vesicles or dispersed pigments within the polymerized bead. Representative polymeric particles useful as opacifying agents include beads of polystyrene, polyacrylic, polyethylene, polyamide, poly(vinylacetate ethylene), melamine formaldehyde, urea formaldehyde, polyester and polyurethane. Representative commercially available polymeric pigments are sold under the Ropaque, Dylex (polystyrene) and Pergopak (urea formaldehyde) trademarks. If polymeric opacifying agents are incorporated they typically will comprise between about 1% and about 85% by weight of the total amount of opacifying agents and pigments. Typical additives include dispersants, preservatives, anti foaming agents, thickeners, etc. The coatings of this invention can be applied to any substrate such as wood, wallboard, metal, etc. by any application method including spraying, brushing, rolling, etc. In one embodiment, the coatings are especially useful as interior or exterior paints. If desired, the coatings of this invention can be formulated at very low levels of volatile organic compounds (VOC) presumably because the alkyd acts as a coalescing aid for the latex.

The following examples have been selected to illustrate specific embodiments and practices of advantage to a more complete understanding of the present invention. Unless otherwise indicated, parts means parts by weight and percent is percent by weight.

### EXAMPLE 1 - Crosslinkable Binder Resin

A polymer was prepared as follows. A reaction vessel was charged with 1175.0 parts water and heated to about 85°C under a nitrogen blanket. A first mixture of 72.35 parts water, 4.35 parts anionic surfactant (Rhodafac® RE 610 from Rhodia Chemical), 3.12 parts ammonium persulfate and 0.68 parts 28% aqueous ammonia were added to the heated water. A first feed mixture of 264.90 parts water, 5.42 parts anionic surfactant (Rhodafac® RE 610 from Rhodia Chemical), 3.75 parts 28% aqueous ammonia, 13.60 parts methacrylic acid, 7.82 parts Sipomer Pam-200 phosphate monomer, 31.11 parts Rohamere 6844 (25% aqueous solution of N-(2-methacryloxyethyl)ethylene urea from Rohm Tech, Inc.), 13.60 parts T Mulz® (HEMA phosphate ester from Harcros Chemical), 423.86 parts 2-ethyl hexyl acrylate, 272.41 parts styrene, and 23.33 parts diacetone acrylamide was prepared. An initiator mixture of 1.56 parts of ammonium persulfate and 79.97 parts water was prepared as well. The first feed mixture was fed into the reaction vessel over a period of about 90 minutes. The initiator mixture feed was begun at the same time as the first monomer mixture feed and was continued for the same time 90 minute time period.

Meanwhile, a second feed mixture of 264.90 parts water, 5.42 parts anionic surfactant (Rhodafac® RE 610 from Rhodia Chemical), 3.75 parts 28% aqueous ammonia, 13.60 parts methacrylic acid, 7.82 parts Sipomer Pam-200 phosphate monomer, 31.11 parts Rohamere 6844, 239.32 parts methyl methacrylates, 19.99 parts 2-ethyl hexyl acrylate, 437.12 parts styrene, 13.60 parts T Mulz® (HEMA phosphate ester), and 23.33 parts diacetone acrylamide was prepared. The second monomer mixture was then added into the reaction vessel over about 90 minutes while simultaneously adding a mixture of 1.56 parts ammonium persulfate and 79.97 parts water. The reaction was allowed to cool to about 65°C and a chase oxidizer mixture of 1.68 parts t-butyl hydroperoxide in 31.99 parts water and a chase reducer mixture of 2.40 parts isoascorbic acid, 31.99 parts water, and 0.0.7 parts 28% aqueous ammonia was added over about 45 minutes. The reaction was then allowed to cool to about 33°C and 17.98 parts 28% aqueous ammonia, 11.10 parts Proxel GXL, 17.50 parts adipic dihydrazide and 89.11 parts water were added to the reaction mixture. The water and adipic dihydrazide had been premixed and heated to about 65° until clear. The reaction was held at about 33°C for about 30 minutes after this addition.

### EXAMPLE 2 - Initial PET Alkyd

An initial PET based alkyd was prepared by charging a reaction vessel with the following:

| | |
|---|---|
| 194.85 parts | soya fatty acids (Industrene 225 from BASF Corp.) |
| 0.38 parts | dibutyltin oxide |
| 96.00 parts | polyethylene terephthalate |

and heated to about 500°F (260°C) until all of the PET was melted. The mixture was allowed to cool to about 360°F (182°C) and the following materials were added:

| | |
|---|---|
| 30.80 parts | isophthalic acid |
| 45.57 parts | trimethylol ethane |
| 8.00 parts | methyl propyl ketone |

The reaction mixture was heated to about 380°F (193°C) until most of the water was removed and then gradually heated to about 460°F (238°C) and held at that temperature until an acid value of 7.0 was reached and the mixture allowed to cool.

### EXAMPLE 3 - Acrylic Modified PET Alkyd

A water reducible acrylic modified PET alkyd was prepared by charging a reactor with the following:

| | |
|---|---|
| 78.41 parts | PET alkyd of Example 2 |
| 3.92 parts | alkali refined soybean oil |

which was heated about 245°F (118°C) followed by the addition of:

| | |
|---|---|
| 0.37 parts | dimethylbenzylamine |
| 0.60 parts | methacrylic anhydride |
| 10.87 parts | n-butyl acetate |
| 1.74 parts | methyl propyl ketone |

and heated to 280°F (138°C) and held for 30 minutes.

A monomer mixture comprising:

| | |
|---|---|
| 4.74 parts | acrylic acid |
| 54.02 parts | methyl methacrylate |
| 17.65 parts | 2-ethyl hexyl acrylate and |

an initiator mix of:

| | |
|---|---|
| 0.90 parts | t-butyl perbenzoate |
| 2.32 parts | n-butyl acetate |

were added simultaneously to the reaction vessel over a 3 hour period and then held for 30 minutes followed by the addition, over a 2 hour period, of a chase initiator mix of:

| | |
|---|---|
| 0.9 parts | t-butyl perbenzoate |
| 2.52 parts | n-butyl acetate |
| 0.49 parts | cumene hydroperoxide |
| 0.49 parts | t-butyl hydroperoxide |

The reaction mixture was held for an additional 30 minutes and then dispersed by addition of the reaction mixture into:

| | |
|---|---|
| 205.16 parts | deionized water |
| 4.40 parts | dimethylethanolamine |
| 0.71 parts | defoamer |
| 0.48 parts | isoascorbic acid |

to produce a final monomer modified PET alkyd dispersion with an acid value of 27.4.

A model paint formula can be prepared as follows:

| Raw Material | Parts by Weight |
|---|---|
| Crosslinkable resin of Example 1 | 461.0 |
| Alkyd of Example 3 | 053.0 |
| Defoamer | 001.0 |
| Water | 099.7 |
| Attapulgite Clay¹ | 003.0 |
| Hydroxyethyl Cellulose² | 000.6 |
| Benzisothiazolone Biocide | 001.0 |
| Dispersant³ | 016.3 |
| Emulsifying Agent⁴ | 006.0 |
| Defoamer⁵ | 001.8 |
| Microspheres⁶ | 018.50 |
| 2-(2-B utoxyethoxy)ethanol | 008.0 |
| Water | 059.8 |
| Coalescent | 12.0 |
| Non-ionic thickener⁸ | 31.0 |
| Titanium Dioxide Slurry⁹ | 285.0 |
| Fungicide¹⁰ | 002.0 |
| Surfactant¹¹ | 003.0 |
| Water | 010.0 |
| Defoamer¹² | 002.0 |
| Diatomaceous earth | 001.0 |
| Aqueous Ammonia | 001.8 |
| Biocide dowicil QK-20 | 000.3 |

| | |
|---|---|
| ¹Min-U-Gel® 400 from Floridin Company ²Cellosize® ER-52000 from Dow Chemical ³Tamol® 165-A from Rohm and Haas ⁴ Triton® N-57 from Dow Chemical ⁵ Byk-021 ⁶ W410 ceramic microspheres from 3M ⁷ Optifilm enhancer 400 from Eastman ⁸ Aquaflow NHS-350 ⁹ CR8265 ¹⁰ IPBC-20 (20% solution of 3-iodopropynylbutylcarbonate from Arch Chemical) ¹¹ Envirogem 360 ¹² HIMAR DFC-39 | |

While the invention has been shown and described with respect to particular embodiments thereof, those embodiments are for the purpose of illustration rather than limitation, and other variations and modifications of the specific embodiments herein described will be apparent to those skilled in the art, all within the scope of the invention. Accordingly, the invention is not to be limited in scope and effect to the specific embodiments herein described, nor in any other way that is inconsistent with the extent to which the progress in the art has been advanced by the invention.

## Claims

1. An aqueous coating composition comprising:
(i) a crosslinkable binder resin having latent crosslinking functionality;
(ii) an effective crosslinking amount of a crosslinker for the binder resin; and
(iii) a water reducible monomer modified alkyd obtained by the acidolysis of a polyalkylene terephthalate or polyalkylene naphthalate and subsequent monomer modification to produce a polymer having an acid value less than 30.

2. The coating of claim 1, wherein the monomer used for monomer modification is selected from the group consisting of acrylic acid, methacrylic acid, itaconic acid, crotonic acid, maleic acid, half esters of maleic acid, half esters of fumaric acids, alkyl acrylates, alkyl methacrylates, hydroxyalkyl acrylates, hydroxyalkyl methacrylates, acrylamides, methacrylamides, unsaturated nitriles, vinyl aromatic hydrocarbons and vinyl aliphatic hydrocarbons.

3. The coating of claim 1 or 2 wherein the latent crosslinking functionality comprises carbonyl groups.

4. The coating of claim 1, 2 or 3 wherein the crosslinker is selected from the group consisting of di and poly amines, di and poly hydrazides, and di and poly hydrazines and mixtures thereof.

5. The coating of claim 1, 2, 3 or 4 wherein the crosslinkable binder resin is a latex resin.

6. The coating of claim 1, 2, 3, 4 or 5 wherein the crosslinkable binder resin is the polymerized reaction product of a mixture of monomers comprising:
(i) 1 to 25% by weight of a monomer having latent crosslinking functionality;
(ii) 0.5 to 15% by weight of an acid functional monomer;
(iii) 60 to 98.5% of at least one other copolymerizable monomer.

7. The coating of claim 6 wherein the monomer having latent crosslinking functionality has pendent carbonyl groups as reactive crosslinking sites.

8. The coating of any one of claims 1 to 7 wherein the crosslinker is selected from the group consisting of di and poly amines, di and poly hydrazides, and di and poly hydrazines.

9. The coating of any one of claims 1 to 8 wherein the alkyd is present at a level of 5 to 65% based upon the total weight solids of alkyd and crosslinker and crosslinkable binder.

10. The coating of any one of claims 1 to 9 wherein the alkyd is obtained by the acidolysis of a polyalkylene terephthalate.

11. The coating of claim 10 wherein the polyalkylene terephthalate is polyethylene terephthalate.

12. The coating of any one of claims 1 to 11 wherein the alkyd has drying oil or semi-drying oil functionality.

13. A water reducible coating composition comprising:
(a) a crosslinkable binder resin which is the polymerized reaction product of a mixture of monomers comprising:
(i) 1 to 25% by weight of a monomer having pendent carbonyl latent crosslinking functionality;
(ii) 0.5 to 15% by weight of an acid functional monomer; and
(iii) 60 to 98.5% of at least one other copolymerizable monomer; and
(b) a crosslinker for the binder resin selected from the group consisting of di and poly amines, di and poly hydrazides, and di and poly hydrazines; and
(c) a water reducible monomer modified alkyd obtained by the acidolysis of a polyalkylene terephthalate or polyalkylene naphthalate and subsequent monomer modification.

14. The coating of claim 13, wherein the monomer used for monomer modification is selected from the group consisting of acrylic acid, methacrylic acid, itaconic acid, crotonic acid, maleic acid, half esters of maleic acid, half esters of fumaric acids, alkyl acrylates, alkyl methacrylates, hydroxyalkyl acrylates, hydroxyalkyl methacrylates, acrylamides, methacrylamides, unsaturated nitriles, vinyl aromatic hydrocarbons and vinyl aliphatic hydrocarbons.

## Patentansprüche

1. Eine wässrige Beschichtungszusammensetzung, umfassend:
(i) ein vernetzbares Bindemittelharz mit latent vernetzender Funktionalität,
(ii) eine wirksame vernetzende Menge eines Vernetzers für das Bindemittelharz, und
(iii) ein wasserverdünnbares monomermodifiziertes Alkydharz, das erhalten wird durch die Acidolyse eines Polyalkylenterephthalats oder Polyalkylennaphthalats und anschließende Monomermodifizierung, um ein Polymer mit einer Säurezahl von weniger als 30 zu erzeugen.

2. Die Beschichtung nach Anspruch 1, wobei das für die Monomermodifizierung verwendete Monomer ausgewählt ist aus der Gruppe bestehend aus Acrylsäure, Methacrylsäure, Itaconsäure, Crotonsäure, Maleinsäure, Halbestern der Maleinsäure, Halbestern von Fumarsäuren, Alkylacrylaten, Alkylmethacrylaten, Hydroxyalkylacrylaten, Hydroxyalkylmethacrylaten, Acrylamiden, Methacrylamiden, ungesättigten Nitrilen, aromatischen Vinylkohlenwasserstoffen und aliphatischen Vinylkohlenwasserstoffen.

3. Die Beschichtung nach Anspruch 1 oder 2, wobei die latent vernetzende Funktionalität Carbonylgruppen umfasst.

4. Die Beschichtung nach Anspruch 1, 2 oder 3, wobei der Vernetzer ausgewählt ist aus der Gruppe bestehend aus Di- und Polyaminen, Di- und Polyhydraziden und Di- und Polyhydrazinen und Mischungen davon.

5. Die Beschichtung nach Anspruch 1, 2, 3 oder 4, wobei das vernetzbare Bindemittelharz ein Latexharz ist.

6. Die Beschichtung nach Anspruch 1, 2, 3, 4 oder 5, wobei das vernetzbare Bindemittelharz das polymerisierte Reaktionsprodukt einer Monomerenmischung ist, die umfasst:
(i) 1 bis 25 Gew.-% eines Monomers mit latent vernetzender Funktionalität,
(ii) 0,5 bis 15 Gew.-% eines säurefunktionellen Monomers,
(iii) 60 bis 98,5% wenigstens eines anderen copolymerisierbaren Monomers.

7. Die Beschichtung nach Anspruch 6, wobei das Monomer mit latent vernetzender Funktionalität anhängende Carbonylgruppen als reaktive Vernetzungsstellen besitzt.

8. Die Beschichtung nach einem der Ansprüche 1 bis 7, wobei der Vernetzer ausgewählt ist aus der Gruppe bestehend aus Di- und Polyaminen, Di- und Polyhydraziden und Di- und Polyhydrazinen.

9. Die Beschichtung nach einem der Ansprüche 1 bis 8, wobei das Alkydharz in einer Konzentration von 5 bis 65% vorliegt, bezogen auf das Gesamtfeststoffgewicht aus Alkydharz und Vernetzer und vernetzbarem Bindemittel.

10. Die Beschichtung nach einem der Ansprüche 1 bis 9, wobei das Alkydharz durch die Acidolyse eines Polyalkylenterephthalats erhalten wird.

11. Die Beschichtung nach Anspruch 10, wobei das Polyalkylenterephthalat Polyethylenterephthalat ist.

12. Die Beschichtung nach einem der Ansprüche 1 bis 11, wobei das Alkydharz eine Funktionalität als trocknendes Öl oder halbtrocknendes Öl besitzt.

13. Eine wasserverdünnbare Beschichtungszusammensetzung, umfassend:
(a) ein vernetzbares Bindemittelharz, das das polymerisierte Reaktionsprodukt einer Monomerenmischung ist, die umfasst:
(i) 1 bis 25 Gew.-% eines Monomers mit latent vernetzender Funktionalität in Form von anhängendem Carbonyl,
(ii) 0,5 bis 15 Gew.-% eines säurefunktionellen Monomers und
(iii) 60 bis 98,5% wenigstens eines anderen copolymerisierbaren Monomers, und
(b) einen Vernetzer für das Bindemittelharz, ausgewählt aus der Gruppe bestehend aus Di- und Polyaminen, Di- und Polyhydraziden und Di- und Polyhydrazinen, und
(c) ein wasserverdünnbares monomermodifiziertes Alkydharz, das durch die Acidolyse eines Polyalkylenterephthalats oder Polyalkylennaphthalats und anschließende Monomermodifizierung erhalten wird.

14. Die Beschichtung nach Anspruch 13, wobei das für die Monomermodifizierung verwendete Monomer ausgewählt ist aus der Gruppe bestehend aus Acrylsäure, Methacrylsäure, Itaconsäure, Crotonsäure, Maleinsäure, Halbestern der Maleinsäure, Halbestern von Fumarsäuren, Alkylacrylaten, Alkylmethacrylaten, Hydroxyalkylacrylaten, Hydroxyalkylmethacrylaten, Acrylamiden, Methacrylamiden, ungesättigten Nitrilen, aromatischen Vinylkohlenwasserstoffen und aliphatischen Vinylkohlenwasserstoffen.

## Revendications

1. Composition de revêtement aqueuse comprenant :
(i) une résine liante réticulable ayant une fonctionnalité réticulante latente ;
(ii) une quantité d'un réticulant permettant une réticulation efficace de la résine liante ; et
(iii) un alkyde modifié par un monomère diluable à l'eau obtenu par acidolyse d'un poly(téréphtalate d'alkylène) ou d'un poly(naphtalate d'alkylène) et modification ultérieure du monomère pour produire un polymère dont l'indice d'acidité est inférieur à 30.

2. Revêtement de la revendication 1, dans lequel le monomère utilisé pour la modification du monomère est sélectionné dans le groupe consistant en un acide acrylique, un acide méthacrylique, un acide itaconique, un acide crotonique, un acide maléique, des demi-esters d'un acide maléique, des demi-esters d'acides fumariques, des acrylates alkyliques, des méthacrylates alkyliques, des acrylates hydroxyalkyliques, des méthacrylates hydroxyalkyliques, des acrylamides, des méthacrylamides, des nitriles insaturés, des hydrocarbures vinyliques aromatiques et des hydrocarbures vinyliques aliphatiques.

3. Revêtement de la revendication 1 ou 2, dans lequel la fonctionnalité réticulante latente comprend des groupements carbonyles.

4. Revêtement de la revendication 1, 2 ou 3, dans lequel le réticulant est sélectionné dans le groupe consistant en des di- et polyamines, des di- et polyhydrazides, des di- et polyhydrazines et des mélanges de ceux-ci.

5. Revêtement de la revendication 1, 2, 3 ou 4, dans lequel la résine liante réticulable est une résine de latex.

6. Revêtement de la revendication 1, 2, 3, 4 ou 5, dans lequel la résine liante réticulable est le produit de réaction polymérisé d'un mélange de monomères comprenant :
(i) de 1 à 25 % en poids d'un monomère ayant une fonctionnalité réticulante latente ;
(ii) de 0,5 à 15 % en poids d'un monomère fonctionnel acide ;
(iii) de 60 à 98,5 % d'au moins un autre monomère copolymérisable.

7. Revêtement de la revendication 6, dans lequel le monomère ayant une fonctionnalité réticulante latente présente des groupements carbonyles pendants en tant que sites de réticulation réactifs.

8. Revêtement de l'une quelconque des revendications 1 à 7, dans lequel le réticulant est sélectionné dans le groupe consistant en des di- et polyamines, des di- et polyhydrazides et des di- et polyhydrazines.

9. Revêtement de l'une quelconque des revendications 1 à 8, dans lequel l'alkyde est présent à un taux de 5 à 65 % sur la base du poids total des solides de l'alkyde, du réticulant et du liant réticulable.

10. Revêtement de l'une quelconque des revendications 1 à 9, dans lequel l'alkyde est obtenu par acidolyse d'un poly(téréphtalate d'alkylène).

11. Revêtement de la revendication 10, dans lequel le poly(téréphtalate d'alkylène) est un poly(téréphtalate d'éthylène).

12. Revêtement de l'une quelconque des revendications 1 à 11, dans lequel l'alkyde a une fonctionnalité d'une huile siccative ou demi-siccative.

13. Composition de revêtement diluable à l'eau comprenant :
(a) une résine liante réticulable qui est le produit de réaction polymérisé d'un mélange de monomères comprenant :
(i) de 1 à 25 % en poids d'un monomère ayant une fonctionnalité carbonyle réticulante latente pendante ;
(ii) de 0,5 à 15 % en poids d'un monomère fonctionnel acide ; et
(iii) de 60 à 98,5 % d'au moins un autre monomère copolymérisable ; et
(b) un réticulant pour la résine liante sélectionné dans le groupe consistant en des di- et polyamines, des di- et polyhydrazides et des di- et polyhydrazines ; et
(c) un alkyde modifié par un monomère diluable à l'eau obtenu par acidolyse d'un poly(téréphtalate d'alkylène) ou d'un poly(naphtalate d'alkylène) et modification ultérieure du monomère.

14. Revêtement de la revendication 13, dans lequel le monomère utilisé pour la modification du monomère est sélectionné dans le groupe consistant en un acide acrylique, un acide méthacrylique, un acide itaconique, un acide crotonique, un acide maléique, des demi-esters d'un acide maléique, des demi-esters d'acides fumariques, des acrylates alkyliques, des méthacrylates alkyliques, des acrylates hydroxyalkyliques, des méthacrylates hydroxyalkyliques, des acrylamides, des méthacrylamides, des nitriles insaturés, des hydrocarbures vinyliques aromatiques et des hydrocarbures vinyliques aliphatiques.
